# EUROPEAN PATENT APPLICATION

(11) **EP 3 173 724 A1**
(43) Date of publication of application: **31.05.2017**
(21) Application number: 16198735.9
(22) Date of filing: 14.11.2016
(51) Int. Cl.: F28F 9/02, F28D 7/00

(54) **HEADER FOR HEAT EXCHANGER**

(30) Priority: 24.11.2015 US 201514950143
(71) Applicant: Hamilton Sundstrand Corporation, Windsor Locks, CT 06096-1010 (US)
(72) Inventor: KUCZEK, Andrzej Ernest, Bristol, CT 06010 (US); WONG, Eva, Glastonbury, CT 06033 (US); ST. ROCK, Brian, Andover, CT 06232 (US)
(74) Representative: Iceton, Greg James

(57) **Abstract**

A header (316) for a heat exchanger having a first phase (316a) with a first pipe connector defining a first flow path and a second pipe connector defining a second flow path fluidly isolated from the first flow path. A second phase (316b) in which the first and second flow paths are merged while maintaining fluid isolation of the two flow paths wherein in the second phase the first flow path comprises at least one first layer and the second flow path comprises at least one second layer. A third phase (316c) in which the at least one first layer and the at least one second layer are substantially overlapping and wherein the third phase is configured to fluidly connect the first flow path to a first section of a core of a heat exchanger and the second flow path to a second section of the core different from the first section.

## Description

### BACKGROUND

The subject matter disclosed herein generally relates to heat exchangers and, more particularly, to headers for heat exchangers.

Headers for heat exchangers may be configured as large plenums (inlet/outlet manifolds) occupying a significant amount of space as compared to a heat exchanger core. In operation, fluids enter the inlet manifolds through one or more pipes. The fluid then diffuses in an inlet manifold, flows through the heat exchanger core, and is collected by an outlet manifold. The flow exits the manifold through an outlet pipe. The pipe and manifold configuration may be constrained by other components in a system in which the heat exchanger is located, and thus the pipe and manifold system may not be optimized for performance, but rather optimized based on space constraints.

A pressure drop may result due to the expansion and the contraction of the fluid flow from the inlet and outlet pipes into the manifolds. The manifolds, e.g., headers, at each of the inlet and the outlet may be configured to distribute flow in a passive way that may require significant back pressure that may further result in parasitic losses in the system. In addition, a flow through the heat exchanger may be subjected to losses at the entrance to a conventional multi-layer sandwich core by blinded channels associated with a second flow. The flow could also be non-uniform within the headers/manifolds, which can lead to flow maldistribution within the heat exchanger core. A flow maldistribution in the core may decrease the performance of the heat exchanger.

### SUMMARY

According to one embodiment, a header for a heat exchanger is provided. The header includes a first phase having a first pipe connector configured to receive a first fluid and defining a first flow path and a second pipe connector configured to receive a second fluid and defining a second flow path fluidly isolated from the first flow path. The header further includes a second phase wherein the first flow path and the second flow path are merged while maintaining fluid isolation of the first flow path and the second flow path wherein in the second phase the first flow path comprises at least one first layer and the second flow path comprises at least one second layer. The header further includes a third phase wherein the at least one first layer and the at least one second layer are substantially overlapping and wherein the third phase is configured to fluidly connect the first flow path to a first section of a core of a heat exchanger and the second flow path to a second section of the core of the heat exchanger different from the first section.

In addition to one or more of the features described herein, or as an alternative, further embodiments of the header may include at least one vertical divider disposed within at least one of the first pipe connector and the second pipe connector, the at least one vertical divider configured to direct fluid flow within the respective first pipe connector and second pipe connector.

In addition to one or more of the features described herein, or as an alternative, further embodiments of the header may include that the at least one vertical divider extends from the respective first pipe connector or second pipe connector through the second phase to the third phase.

In addition to one or more of the features described herein, or as an alternative, further embodiments of the header may include that the at least one vertical divider is configured to connect to a vertical divider within the core such that a continuous flow path is formed extending from the first phase to the core.

In addition to one or more of the features described herein, or as an alternative, further embodiments of the header may include that the at least one vertical divider is a turning vane.

In addition to one or more of the features described herein, or as an alternative, further embodiments of the header may include that at least one horizontal divider is defined between the at least one first layer and the at least one second layer within the second phase.

In addition to one or more of the features described herein, or as an alternative, further embodiments of the header may include that the at least one horizontal divider is configured to separate the first flow path and the second flow path within the second phase.

In addition to one or more of the features described herein, or as an alternative, further embodiments of the header may include that the at least one horizontal divider is configured to connect to a horizontal divider within the core such that a continuous flow path is formed extending from the second phase to the core along the horizontal divider.

In addition to one or more of the features described herein, or as an alternative, further embodiments of the header may include that the at least one first layer and the at least one second layer define an alternating pattern of first layers and second layers.

According to another embodiment, a heat exchanger is provided. The heat exchanger includes a core having a first section and a second section, wherein the first section is fluidly isolated from the second section, the core having a first end and a second end and a header connected at the first end. The header includes a first phase comprising a first pipe connector configured to receive a first fluid and defining a first flow path and a second pipe connector configured to receive a second fluid and defining a second flow path fluidly isolated from the first flow path, a second phase wherein the first flow path and the second flow path are merged while maintaining fluid isolation of the first flow path and the second flow path wherein, in the second phase, the first flow path comprises at least one first layer and the second flow path comprises at least one second layer, and a third phase wherein the at least one first layer and the at least one second layer are substantially overlapping and wherein the third phase is configured to fluidly connect the first flow path to the first section of the and the second flow path to the second section of the core different from the first section.

In addition to one or more of the features described herein, or as an alternative, further embodiments of the heat exchanger may include that the header is a first header, the heat exchanger further comprising a second header located at the second end, the second header comprising: a second header first phase comprising a first pipe connector configured to receive the first fluid and fluidly connected to the first flow path and a second pipe connector configured to receive the second fluid and fluidly connected to the second flow path; a second header second phase wherein the first flow path and the second flow path are merged while maintaining fluid isolation of the first flow path and the second flow path; and a second header third phase configured to fluidly connect the first section of the core to the first flow path within the second header second phase and fluidly connect the second section of the core to the second flow path within the second header second section.

In addition to one or more of the features described herein, or as an alternative, further embodiments of the heat exchanger may include at least one vertical divider disposed within at least one of the first pipe connector and the second pipe connector, the at least one vertical divider configured to direct fluid flow within the respective first pipe connector and second pipe connector.

In addition to one or more of the features described herein, or as an alternative, further embodiments of the heat exchanger may include that the at least one vertical divider extends from the respective first pipe connector or second pipe connector through the second phase to the third phase.

In addition to one or more of the features described herein, or as an alternative, further embodiments of the heat exchanger may include that the at least one vertical divider is configured to connect to a vertical divider within the core such that a continuous flow path is formed extending from the first phase to the core.

In addition to one or more of the features described herein, or as an alternative, further embodiments of the heat exchanger may include that at least one horizontal divider is defined between the at least one first layer and the at least one second layer within the second phase.

In addition to one or more of the features described herein, or as an alternative, further embodiments of the heat exchanger may include that the at least one horizontal divider is configured to separate the first flow path and the second flow path within the second phase.

In addition to one or more of the features described herein, or as an alternative, further embodiments of the heat exchanger may include that the at least one horizontal divider is configured to connect to a horizontal divider within the core such that a continuous flow path is formed extending from the second phase to the core along the horizontal divider.

In addition to one or more of the features described herein, or as an alternative, further embodiments of the heat exchanger may include that the at least one first layer and the at least one second layer define an alternating pattern of first layers and second layers.

According to another embodiment, a method of manufacturing a header of a heat exchanger is provided. The method includes forming a first phase comprising a first pipe connector and a second pipe connector, the first pipe connector configured to receive a first fluid and define a first flow path and the second pipe connector configured to receive a second fluid and define a second flow path fluidly isolated from the first flow path, forming a second phase wherein the first flow path and the second flow path are merged while maintaining fluid isolation of the first flow path and the second flow path and wherein the first flow path comprises at least one first layer and the second flow path comprises at least one second layer, and forming a third phase wherein the at least one first layer and the at least one second layer are substantially overlapping and wherein the third phase is configured to fluidly connect the first flow path to a first portion of a core of a heat exchanger and the second flow path to a second portion of the core of the heat exchanger different from the first section.

In addition to one or more of the features described herein, or as an alternative, further embodiments of the method may include that the forming comprises additive manufacturing.

Technical effects of embodiments of the present disclosure include a header for a heat exchanger that guides or directs fluid flow into and/or out of a core of a heat exchanger in a fluidly efficient manner. Further technical effects include improved thermal management of stress concentrations by eliminating sharp corners and/or flat surfaces within a fluid transition from a pipe to a core or from the core to a pipe in a heat exchanger.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a perspective illustration of a heat exchanger in accordance with an embodiment of the present disclosure;
FIG. 2A is a perspective illustration of a heat exchanger in accordance with an embodiment of the present disclosure;
FIG. 2B is a perspective illustration showing a cutout or sliced section of the heat exchanger of FIG. 2A;
FIG. 2C is a perspective illustration showing another cutout or sliced section of the heat exchanger of FIG. 2A;
FIG. 2D is a perspective illustration showing another cutout or sliced section of the heat exchanger of FIG. 2A;
FIG. 2E is a perspective illustration showing another cutout or sliced section of the heat exchanger of FIG. 2A;
FIG. 2F is a perspective illustration showing another cutout or sliced section of the heat exchanger of FIG. 2A;
FIG. 2G is a perspective illustration showing another cutout or sliced section of the heat exchanger of FIG. 2A;
FIG. 2H is a perspective illustration showing another cutout or sliced section of the heat exchanger of FIG. 2A;
FIG. 3 is a top down plan schematic illustration of a header in accordance with a non-limiting embodiment of the present disclosure;
FIG. 4A is a top down plan schematic illustration of a fluid flow of a first fluid through a heat exchanger in accordance with a non-limiting embodiment of the present disclosure;
FIG. 4B is a top down plan schematic illustration of a fluid flow of a second fluid through the heat exchanger of FIG. 4A;
FIG. 5A is a perspective cutaway illustration of a heat exchanger in accordance with a non-limiting embodiment of the present disclosure;
FIG. 5B is a perspective illustration showing a cutout or sliced section of the heat exchanger of FIG. 5A;
FIG. 5C is a perspective illustration showing another cutout or sliced section of the heat exchanger of FIG. 5A;
FIG. 5D is a perspective illustration showing another cutout or sliced section of the heat exchanger of FIG. 5A; and
FIG. 6 is a flow process for manufacturing a header of a heat exchanger in accordance with a non-limiting embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

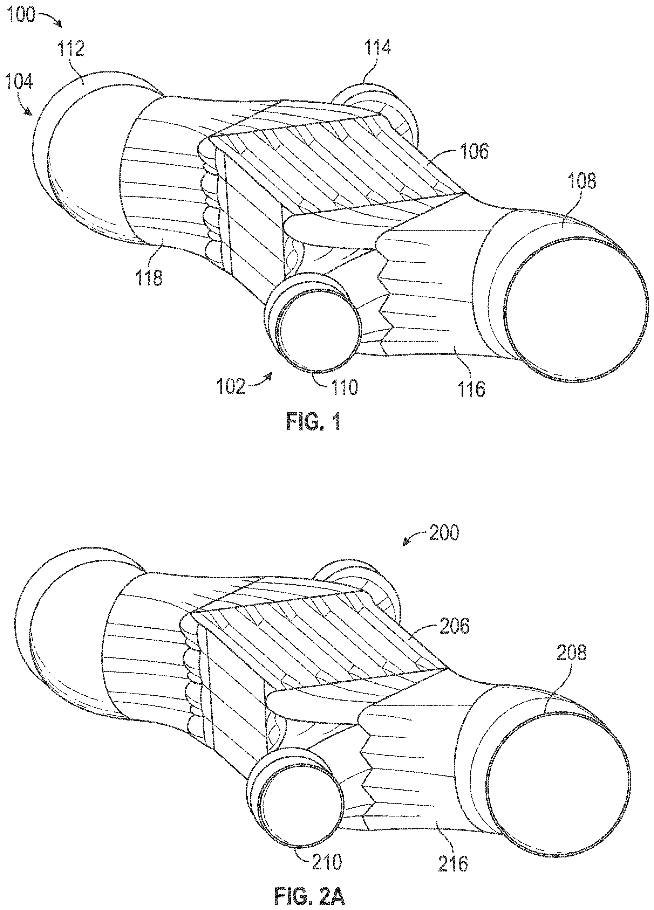

FIG. 1 is a schematic illustration of a heat exchanger in accordance with a non-limiting embodiment of the present disclosure. Heat exchanger 100 may be configured having an inlet end 102, an outlet end 104, and a core 106 located therebetween. The inlet end 102 includes a first inlet pipe connector 108 and a second inlet pipe connector 110, that are each configured to connect with respective pipes having respective first and second fluids therein. The outlet end 104 includes a first outlet pipe connector 112 and a second outlet pipe connector 114. The pipe connectors 108, 110, 112, and 114 define flow paths therethrough and are configured to receive fluids therein. For example, the first inlet pipe connector 108 and the first outlet pipe connector 112 may define a first flow path therebetween and the second inlet pipe connector 110 and the second outlet pipe connector 114 may define a second flow path therebetween

A first fluid may flow into the heat exchanger 100 at the first inlet pipe connector 108, into a first portion of the core 106, and then to the first outlet pipe connector 112. Thus, the first portion of the core 106 fluidly connects the first inlet pipe connector 108 with the first outlet pipe connector 112. Similarly, a second fluid may flow into the heat exchanger 100 at the second inlet pipe connector 110, into a second portion of the core 106, and then to the second outlet pipe connector 114. Thus, the second portion of the core 106 fluidly connects the second inlet pipe connector 108 with the second outlet pipe connector 112.

As will be appreciated by those of skill in the art, the above description provides for the first fluid and the second fluid to flow in the same direction through the heat exchanger 100. However, in some embodiments, the fluid may flow in opposite directions (e.g., the inlet is the outlet, and the outlet is the inlet - i.e., a parallel flow heat exchanger). Further, in some embodiments, the first fluid may flow in a direction that is opposite the fluid flow direction of the second fluid (e.g., a contra-flow heat exchanger), wherein one set of inlet-outlet is reversed as compared to that described above. Thus, the fluid flow direction is not limited to the present description, and further, the terms "inlet" and "outlet" may be interchangeable and dependent on the particular configuration of the heat exchanger.

The core 106 may be configured with a plurality of flow paths that run substantially parallel to each other, extending from the inlet end 102 to the outlet end 104, with a first portion of the core 106 fluidly connecting the first inlet pipe connector 108 with the first outlet pipe connector 112 and fluidly isolating or separating a first fluid within the first portion from a second portion of the core 106. Thus, the second portion of the core 106 fluidly isolates the second fluid therein and fluidly connects the second inlet pipe connector 110 with the second outlet pipe connector 114. As will be appreciated by those of skill in the art, the first and second portions of the core 106 may be formed of pipes, tubing, or other types of flow paths and/or connectors. The first portion and the second portion of the core 106 are configured to enable thermal exchange between the first fluid and the second fluid as the fluids pass therethrough. As used herein, the fluids may be liquids, gases, plasmas, and/or combinations thereof.

In traditional heat exchangers, a header may be configured to direct a fluid from a pipe into a portion of a core of the heat exchanger, with all heat or thermal exchange between two fluids occurring within the core. Because the headers may be configured as large plenums, losses may occur due to fluid flow restrictions, changes in direction, etc. as the fluid flows from the header into the core or from the core and into the header.

However, as shown, each of the first end 102 and the second end 104 are configured with headers 116, 118, respectively. Headers as described herein may be headers that transition fluid flow from a pipe to a respective portion of a core of a heat exchanger or vice versa, and may further allow thermal exchange between two fluids within the header. The headers 116, 118 may be configured to guide fluids with minimum pressure drop and interweave or interleave the paths of the fluids smoothly into a multi-layer configuration prior to entering the core 106. That is, the first header 116 enables a smooth transition from the inlet pipes 108, 110 to respective portions of the core 106, and the second header 118 enables a smooth transition from the respective portions of the core 106 to the outlet pipes 112, 114. As such, the heat or thermal exchange between the first and second fluids may begin when the fluid is in the headers 116, 118 and further the fluids may not experience losses due to fluid flow restrictions as compared to traditional plenum configurations.

The fluid flows within the first header 116 may overlap such that fluids from the first inlet pipe connector 108 may thermally interact with fluids from the second inlet pipe connector 110. For example, the flow paths may be separated by a single wall of the first header 116. As such, a thermal exchange process may begin within the first header, and thus the thermal exchange may be extended from the core 106 to the first header 116. A similar process and configuration may exist within the second header 118. In accordance with various embodiments, merged portions or surfaces, as shown and described below, of the headers 116, 118 may enable thermal stress concentration management because sharp corners or flat surfaces may be eliminated from the headers and the fluid flows may not be impacted by any sharp corners or flat surfaces.

Turning now to FIGS. 2A-2H, a number of sectional or sliced views of a heat exchanger 200 in accordance with a non-limiting embodiment of the present disclosure are shown. Progressing from FIG. 2A to FIG. 2H, various sliced-views of the heat exchanger 200 are shown, showing the detail of the construction of a header 216 in accordance with a non-limiting embodiment.

For example, as shown in FIG. 2A, the heat exchanger 200 may have a core 206 that is supplied by a first fluid in a first inlet pipe connector 208 to a first portion of the core 206. Further, a second inlet pipe connector 210 may supply a second portion of the core 206 with a second fluid. The first inlet pipe connector 208 and the second inlet pipe connector 210 may fluidly connect to the respective portions of the core through the header 216.

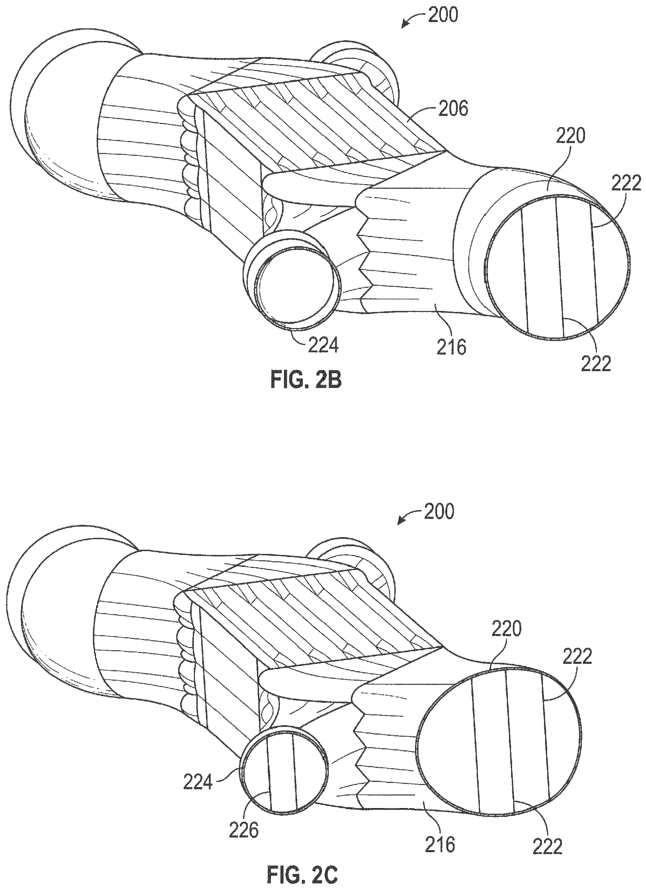

With reference to FIG. 2B, a slice or view of the heat exchanger 200 is shown, with a view within the header 216 that is downstream or toward the core 206 as compared to the illustration of FIG. 2A. The header 216 may be formed from two sections, one section configured to have a first fluid pass therethrough (e.g., a first section 220) and another section fluidly isolated therefrom and configured to have a second fluid pass therethrough (e.g., a second section 224).

The first section 220 of the header 216, as shown, includes one or more vertical dividers 222 in the flow path thereof. The vertical dividers 222 may be configured to direct and/or control the first fluid that is flowing from the first inlet pipe connector 208 within the first section 220 of the header 216. As such, in accordance with some embodiments, the vertical dividers may be configured as turning vanes that are vertical walls that curve or turn with the contour of the first section 220 of the header 216 leading from the first inlet pipe connector 208 to a respective first section of the core 206. That is, the vertical dividers 222 may provide fluid flow direction and control within the header 216 to thus reduce fluid flow maldistributions. As shown, the second section 224 of the header 216 may not include vertical dividers at this particular position within the second section 224. This may be because of the pipe and/or section diameter of the header 216 at the particular location, such that vertical dividers may not be necessary.

However, as shown in FIG. 2C, both the first section 220 and the second section 224 include vertical dividers 222, 226 within the header 216. That is, as shown, the vertical dividers 222 in the first section 220 of the header 216 continue along the first section 220. Further, the vertical dividers 226 are located within the second section 224 and may assist in directing and/or controlling fluid flow as it passes from the second inlet pipe connector 210 to a respective second section of the core 206.

As shown in FIG. 2C, the geometric shape of the first section 220 and the second section 224 change as the first and second sections 220, 224 of the header 216 extend from the respective pipes 208, 210 to respective portions of the core 206. For example, as shown in FIG. 2C, both the first section 220 and the second section 224 become oblong or more elliptical as compared to the configuration (slice) shown in FIG. 2B. That is, the two sections 220, 224 merge and/or interleave, as shown and described below.

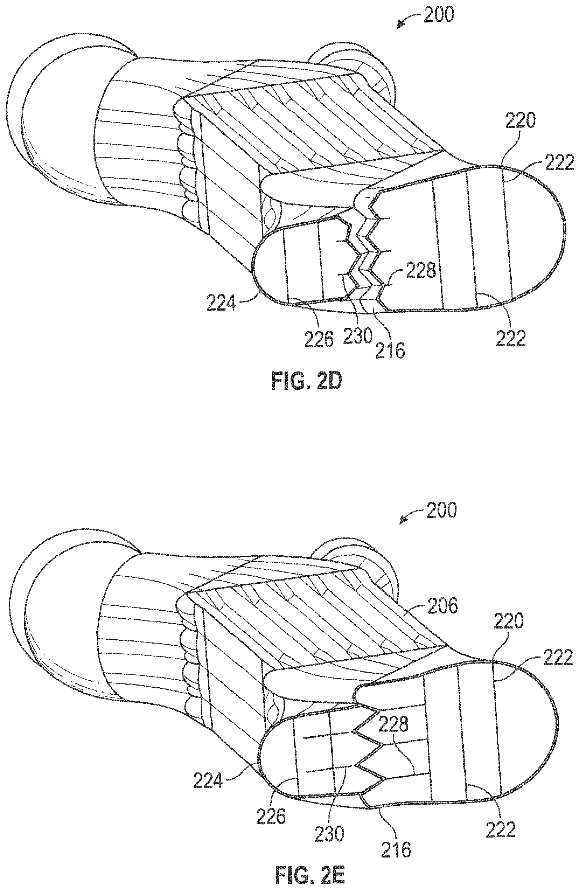

Turning now to FIG. 2D, another slice or sectional view of the heat exchanger 200 is shown. As shown in FIG. 2D, the first and second sections 220, 224 of the header 216 approach each other and have vertical dividers 222, 226, respectively, therein. Further, as shown, each of the first section 220 and the second section 224 have horizontal dividers 228, 230, respectively, begin to form therein. The horizontal dividers 228, 230 extend in a flow direction within the respective sections 220, 224 of the header 216. The horizontal dividers 228, 230 may be configured to separate flow paths of the first section 220 and the second section 224, and form the sections 220, 224 into layers, which may be configured to allow a smooth transition to or from the core 206, as shown and described below. In FIG. 2D, the horizontal dividers 228, 230 do not extend across the entire respective section 220, 224.

Turning now to FIG. 2E, another slice or sectional view of the heat exchanger 200 is shown. In this view, the first section 220 and the second section 224 are shown merging together, wherein individual layers of each section overlap or interleave. That is, the horizontal dividers 228, 230 enable layers of the first section 220 to alternate with layers of the second section 224. The layers of the first section 220 and the layers of the second section 224 may be configured to align or fluidly connect with respective portions of the core 206. The layers of the first and second sections 220, 224 may be separated by a single wall, and thus thermal communication between the first section 220 and the second section 224 may occur.

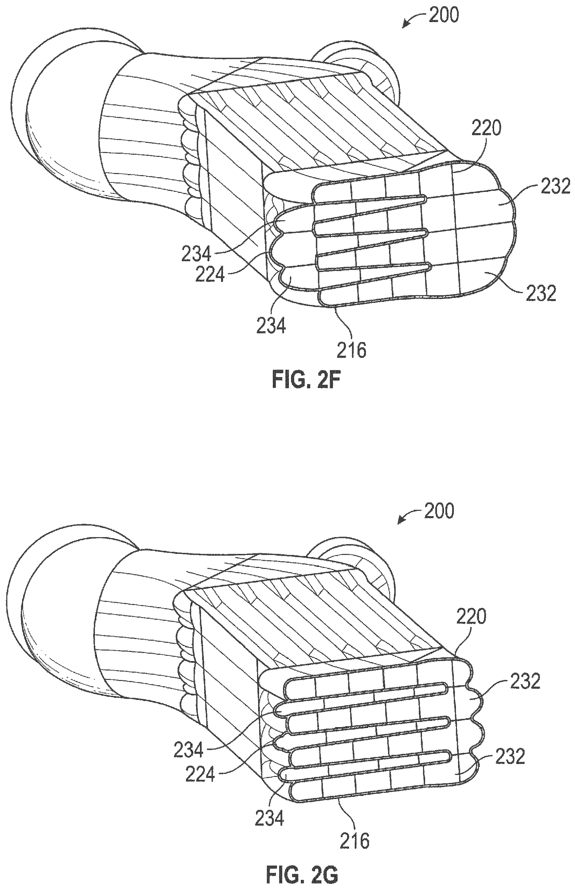

FIGS. 2F and 2G show a continuation and progression of the first section 220 and the second section 224 merging and overlapping. As shown, first layers 232 of the first portion 220 are formed and second layers 234 of the second portion 224 are formed, with the first layers 232 and the second layers 234 alternating within the header 216. As shown, the first layers 232 and the second layers 234 become progressively more defined extending in the flow direction.

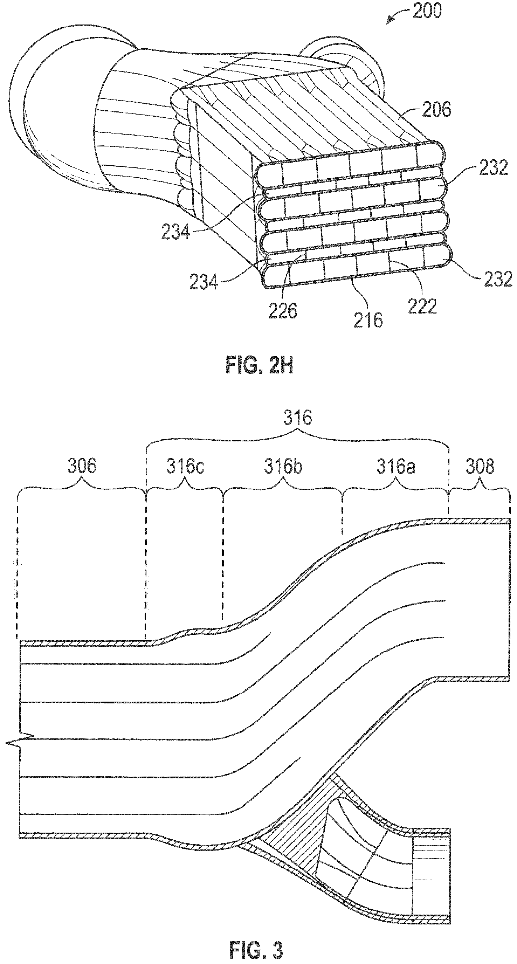

FIG. 2H shows a slice or sectional view of the header 216 of the heat exchanger 200 just before or proximal to the core 206, i.e., where the layers 232, 234 fluidly connect with first and second sections of the core, respectively. As shown, the first layers 232 are substantially parallel with the second layers 234, with the two sets of layers 232, 234 alternating within the header 216. Each of the layers 232, 234 may include the vertical dividers 222, 226, respectively. The vertical dividers 222, 226 may be continuous with dividers within the core 206 such that individual and/or separate flow paths within the header 216 continue into the core 206.

As such, as shown in FIGS. 2A-2H, one end of a section of the header 216 may fluidly connect to a pipe connector 208, 210 and the other end of the same section of the header 216 may fluidly connect with a portion of a heat exchanger core 206, with a smooth, fluid transition from one end to the other of the header. As will be appreciated by those of skill in the art, a similar header may be configured at the other end of the core 206, and the structure shown and described with respect to FIGS. 2A-2H may be the same, but extending in the opposite direction, i.e. starting with the structure shown in FIG. 2H and extending in a flow direction toward the structure shown in FIG. 2A.

Turning now to FIG. 3, a schematic illustration of a header 316 in accordance with a non-limiting embodiment of the present disclosure is shown. The header 316 may fluidly connect a first inlet pipe connector 308 to a core 306, as shown. Although described herein with respect to one portion, and one inlet pipe, of a heat exchanger, those of skill in the art will appreciate that the following description may apply to headers as described herein, and thus is not limited to a first inlet pipe connector 308, as shown.

The header 316 may include three phases. A first phase 316a of the header 316 may include pipe connectors. That is, the first phase 316a may be configured to connect to a pipe connector 308 and may be configured to direct and control fluid flow into the header 316. The first phase 316a may include two parts, one for each fluid that is used in a heat exchanger, with each part connecting to two separate pipes that have first and second fluids therein, respectively.

A second phase 316b, or merging phase, of the header 316 may be a phase wherein the two separate parts of the first phase 316a are merged together. For example, the two separate parts may include flow paths that are interleaved or layered together, as shown and described herein. Thus, in the second phase 316b the merging of two flow paths may be provided while maintaining fluid isolation between the two flow paths.

Finally, in a third phase 316c, such as a core transition phase, the merged and/or layered parts of the header 316 are connected to respective portions of the core 306.

As will be appreciated by those of skill in the art, the first, second, and third phases are explained with respect to a fluid flow flowing from right to left in FIG. 3. It will be appreciated that the order is arbitrary and may be based on the configuration of inlet and/or outlet of the pipes and core of the heat exchanger.

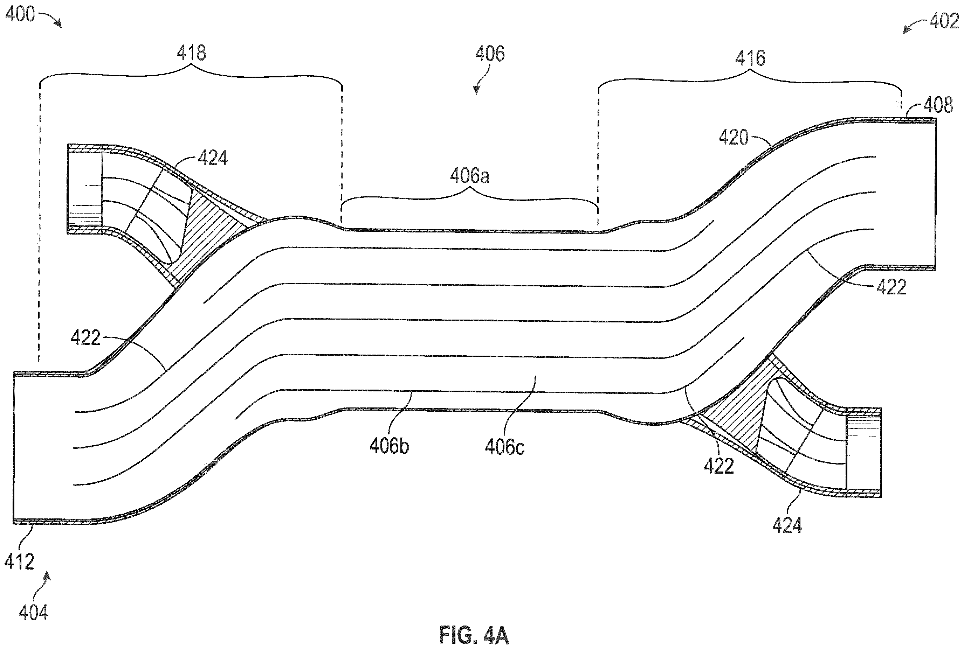

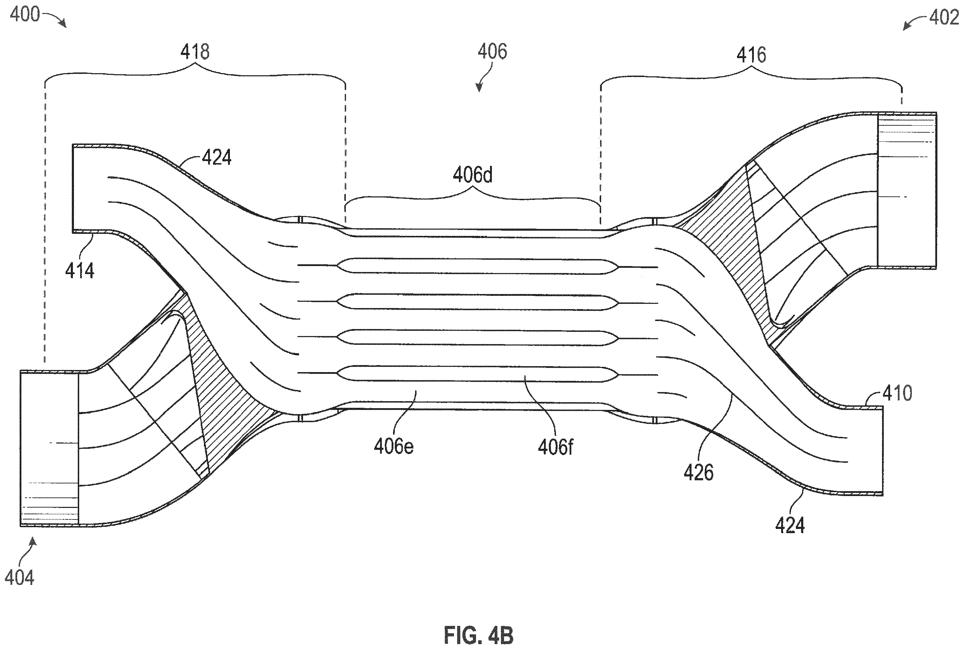

Turning now to FIGS. 4A and 4B, top down or plan schematic illustrations of a heat exchanger 400 in accordance with a non-limiting embodiment of the present disclosure is shown. FIG. 4A shows a plan view of a first fluid flow through the heat exchanger 400 (e.g., fluid in a first section 406a of a core 406) and FIG. 4B shows a plan view of a second fluid flow through the heat exchanger 400 (e.g., fluid in a second section 406b of a core 406).

Referring to FIG. 4A, a first fluid may enter the heat exchanger 400 from a first inlet pipe connector 408 at a first end 402 of the heat exchanger 400. The fluid may then turn within a first header 416 toward a first section 406a of the core 406 within a first section 420 of the first header 416. As shown, a plurality of vertical dividers 422 are configured within the first header 416 at the first end 402. The vertical dividers 422 may be configured to assist in fluid flow control such that the fluid flow from the first inlet pipe connector 408 to the first section 406a of the core 406 is a smooth transition.

The first fluid will then enter the first section 406a of the core 406. The vertical dividers 422, as shown, connect with core dividers 406b of the first section 406a of the core 406 such that a plurality of first section core flow paths 406c are formed within the core 406. The first fluid may then exit the first section 406a of the core 406 into a second header 418 that is at a second end 404 of the heat exchanger 400. The second header 418 may also have vertical dividers 422 that are configured to enable a smooth fluid flow transition from the core 406 to a first outlet pipe connector 412 at the second end 404 of the heat exchanger 400.

Turning now to FIG. 4B, an alternative plan view illustration of the heat exchanger 400 is shown. In FIG. 4B, the fluid flow path of a second fluid passing through the heat exchanger 400 is shown. The second fluid may flow from a second inlet pipe connector 410 into a second section 424 of the first header 416 and into a second section 406d of the core 406.

As shown, the second section 424 of the first header 416 at the first end 402 may include one or more vertical dividers 426. The second fluid may flow from the first header 416 into a plurality of second section core flow paths 406e that are divided by second section core dividers 406f. The second fluid may then smoothly transition from the core 406 to a second outlet pipe connector 414 by means of a second section 424 of a second header 418 located at the second end 404 of the heat exchanger 400. Specifically, a second section 424 of the second header 418 at the second end 404 may provide a smooth fluid transition from the core 406 to the second outlet pipe connector 414.

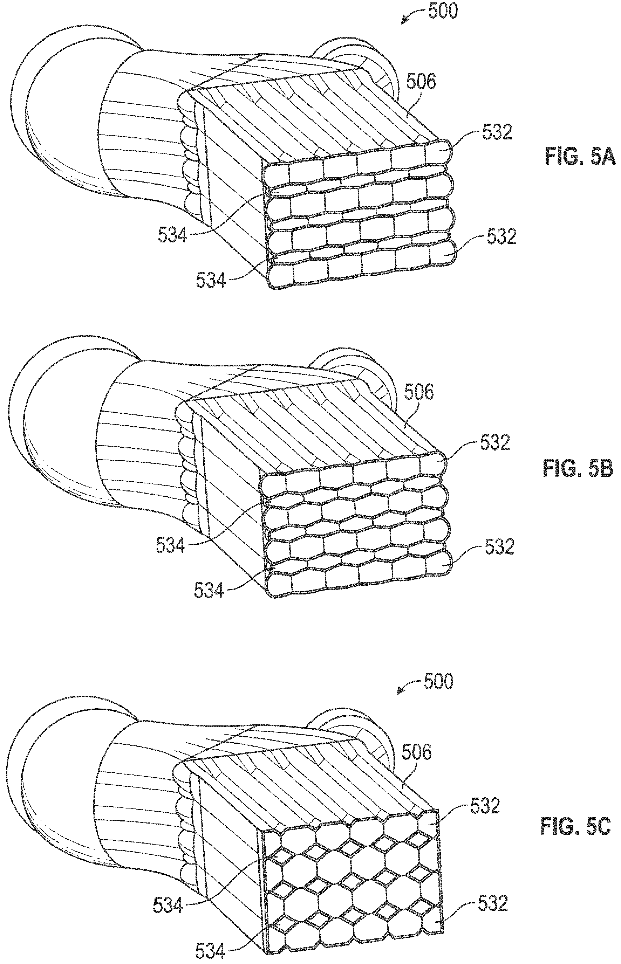

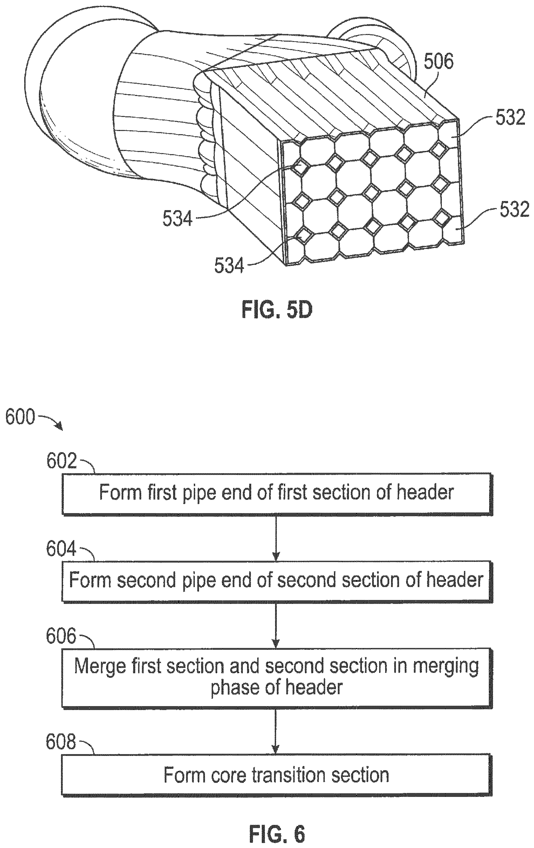

Turning to FIGS. 5A-5D, an alternative non-limiting embodiment of the present disclosure is shown. FIGS. 5A-5D show slices or cross-sectional views of a shaping of the fluid paths within a header in accordance with the present disclosure. As shown in FIG. 5A, first layers 532 and second layers 534 of the header are substantially parallel, forming discrete layers, with individual flow paths therein. As the layers 532, 534 approach the core 506, the horizontal and vertical dividers, as described above, may change such that the second layer 534 forms discrete and separate flow paths, as shown in FIGS. 5C and 5D. That is, the headers as provided herein may enable fluid flow control and management when transitioning from a pipe to a core, or vice versa, in a heat exchanger.

Headers of heat exchanger, as described herein, may enable significant thermal improvement in the heat exchanger core. For example, a counter-flow core configuration (e.g., fluid flow in one section runs in a direction opposite fluid flow in another section) is more effective than a cross flow core configuration. Typical counter-flow heat exchanger headers may result in large pressure drops and may be costly to manufacture. However, heat exchangers with headers as described herein may have lower losses than conventional headers and enable a highly efficient counter-flow core configuration. In addition, headers as described herein can improve thermal performance of the heat exchanger by increasing a primary heat transfer area as shown, for example, in FIGS. 5A-5D. That is, in some embodiments, each layer 532, 534 of the sections of the header may be folded locally and merged into a "check board" pattern as shown.

Turning now to FIG. 6, a flow process for manufacturing a header for a heat exchanger in accordance with the present disclosure is shown. At block 602, a first pipe end of a first section of the header may be formed. At block 604, a second pipe end of a second section of the header may be formed. Blocks 602 and 604 may be the formation of a first phase or pipe transition phase of the header (for example, as shown in FIGS.2A-2C).

At block 606, the first section and the second section of the header may be merged together and/or interleaved. For example, block 606 may be the formation of a second phase, such as a transition phase or merging phase of the header. During the process of block 606, the two sections formed at blocks 602 and 604 may be transformed such that layers are formed of each of the sections and the layers are alternated, as shown and described above (for example, as shown in FIGS. 2D-2G).

Finally, a third phase may be formed, such as a core transition section. The core transition section may be configured to attach to a core, and each of the layered sections of the header may be configured to provide fluid connection with respective sections of the core (for example, as shown in FIG. 2H).

As will be appreciated by those of skill in the art, the order of the steps of the process 600 may be varied without departing from the scope of the present disclosure. For example, the third phase may be formed first, or in some embodiments, the second phase may be formed first. Further, depending on the manufacturing process, each of the sections may be formed simultaneously (e.g., by additive manufacturing). Further, in some embodiments, the process may further include forming a core section and/or pipes of a heat exchanger that is integrally formed with the header. For example, powder bed laser fusion, powder bed laser sintering, electron beam melting, etc. can be used to produce and manufacture headers as described herein. Those of skill in the art will appreciate that other manufacturing techniques may be used without departing from the scope of the present disclosure. For example, if casting or molding is used to form the header, the process may include installation of the header to a core and/or one or more pipes that are separately formed from the header(s).

Advantageously, headers as described herein may enable flow control into, through, and out of the heat exchanger and may reduce pressure drops, extend the function of the core to the headers, control thermal stresses, more easily integrate with various system configurations, and/or reduce the volume and weight of a heat exchanger. For example, headers as described herein may provide flexibility in the location of the inlets and/or outlets (and respective pipes) which may simplify system design.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although described with respect to example fluid flows, those of skill in the art will appreciate that various other fluid flow configurations may benefit from embodiments described herein. Thus, the various ends and direction or first and second aspects of various components is not to be limiting. Further, the process described herein may be a sub-part of a greater manufacturing process, wherein the core and one or more headers are formed therewith. Additionally, although shown and described with a header located at each end of a core, those of skill in the art will appreciate that a heat exchanger may be formed with only one header and a differently configured header, such as a traditional plenum header, may be used without departing from the scope of the present disclosure.

Accordingly, the present disclosure is not to be seen as limited by the foregoing description, but is only limited by the scope of the appended claims.

## Claims

1. A header (316) for a heat exchanger, the header comprising:
a first phase (316a) comprising:
a first pipe connector (308) configured to receive a first fluid and defining a first flow path; and
a second pipe connector configured to receive a second fluid and defining a second flow path fluidly isolated from the first flow path;
a second phase (316b) wherein the first flow path and the second flow path are merged while maintaining fluid isolation of the first flow path and the second flow path wherein in the second phase the first flow path comprises at least one first layer and the second flow path comprises at least one second layer; and
a third phase (316c) wherein the at least one first layer and the at least one second layer are substantially overlapping and wherein the third phase is configured to fluidly connect the first flow path to a first section of a core of a heat exchanger and the second flow path to a second section of the core of the heat exchanger different from the first section.

2. The header of claim 1, further comprising:
at least one vertical divider disposed within at least one of the first pipe connector and the second pipe connector, the at least one vertical divider configured to direct fluid flow within the respective first pipe connector and second pipe connector.

3. The header of claim 2, wherein the at least one vertical divider extends from the respective first pipe connector or second pipe connector through the second phase to the third phase.

4. The header of any of claims 2-3, wherein the at least one vertical divider is configured to connect to a vertical divider within the core such that a continuous flow path is formed extending from the first phase to the core.

5. The header of any of the preceding claims, wherein at least one horizontal divider is defined between the at least one first layer and the at least one second layer within the second phase.

6. The header of claim 5, wherein the at least one horizontal divider is configured to separate the first flow path and the second flow path within the second phase.

7. The header of any of claims 5-6, wherein the at least one horizontal divider is configured to connect to a horizontal divider within the core such that a continuous flow path is formed extending from the second phase to the core along the horizontal divider.

8. A heat exchanger comprising:
a core having a first section and a second section, wherein the first section is fluidly isolated from the second section, the core having a first end and a second end; and
a header connected at the first end, the header comprising:
a first phase comprising a first pipe connector configured to receive a first fluid and defining a first flow path and a second pipe connector configured to receive a second fluid and defining a second flow path fluidly isolated from the first flow path;
a second phase wherein the first flow path and the second flow path are merged while maintaining fluid isolation of the first flow path and the second flow path wherein, in the second phase, the first flow path comprises at least one first layer and the second flow path comprises at least one second layer; and
a third phase wherein the at least one first layer and the at least one second layer are substantially overlapping and wherein the third phase is configured to fluidly connect the first flow path to the first section of the and the second flow path to the second section of the core different from the first section.

9. The heat exchanger of claim 8, wherein the header is a first header, the heat exchanger further comprising a second header located at the second end, the second header comprising:
a second header first phase comprising a first pipe connector configured to receive the first fluid and fluidly connected to the first flow path and a second pipe connector configured to receive the second fluid and fluidly connected to the second flow path;
a second header second phase wherein the first flow path and the second flow path are merged while maintaining fluid isolation of the first flow path and the second flow path; and
a second header third phase configured to fluidly connect the first section of the core to the first flow path within the second header second phase and fluidly connect the second section of the core to the second flow path within the second header second section.

10. The heat exchanger of claim 9, further comprising at least one vertical divider disposed within at least one of the first pipe connector and the second pipe connector, the at least one vertical divider configured to direct fluid flow within the respective first pipe connector and second pipe connector.

11. The heat exchanger of claim 10, wherein the at least one vertical divider extends from the respective first pipe connector or second pipe connector through the second phase to the third phase.

12. The heat exchanger of any of claims 10-11, wherein the at least one vertical divider is configured to connect to a vertical divider within the core such that a continuous flow path is formed extending from the first phase to the core.

13. The heat exchanger of any of claims 8-12, wherein at least one horizontal divider is defined between the at least one first layer and the at least one second layer within the second phase.

14. The heat exchanger of claim 13, wherein the at least one horizontal divider is configured to separate the first flow path and the second flow path within the second phase.

15. The heat exchanger of any of claims 13-14, wherein the at least one horizontal divider is configured to connect to a horizontal divider within the core such that a continuous flow path is formed extending from the second phase to the core along the horizontal divider.
